# EUROPÄISCHE PATENTSCHRIFT

(11) **EP 2 243 182 B1**
(45) Veröffentlichungstag und Bekanntmachung des Hinweises auf die Patenterteilung: **11.09.2013**
(21) Anmeldenummer: 09710315.4
(22) Anmeldetag: 09.02.2009
(51) Int. Cl.: H01M 8/04

(54) **BEFEUCHTUNGSZELLE**
HUMIDIFICATION CELL
CELLULE D HUMIDIFICATION

(30) Priorität: 13.02.2008 DE 102008009055
(43) Veröffentlichungstag der Anmeldung: 27.10.2010
(73) Patentinhaber: Siemens Aktiengesellschaft, 80333 München (DE)
(72) Erfinder: BRANDT, Torsten, 91301 Forchheim (DE); DATZ, Armin, 91099 Poxdorf (DE); HAMMERSCHMIDT, Albert, 91056 Erlangen (DE); LATZEL, Silke, 91077 Kleinsendelbach (DE); LERSCH, Josef, 91336 Heroldsbach (DE); MATTEJAT, Arno, 91056 Erlangen (DE); STÜHLER, Walter, 96114 Hirschaid (DE); VOITLEIN, Ottmar, 91475 Lonnerstadt (DE)
(86) Internationale Anmeldenummer: PCT/EP2009/051418
(87) Internationale Veröffentlichungsnummer: WO 2009/101036

(56) Entgegenhaltungen:
- EP-A- 1 298 749
- JP-A- 10 172 591
- US-A1- 2006 147 773
- US-A1- 2008 020 260

## Beschreibung

Die Erfindung bezieht sich auf eine Befeuchtungszelle gemäß Oberbegriff des Patentanspruchs 1; eine derartige Befeuchtungszelle ist beispielsweise aus der EP 1 435 121 B1 bekannt.

In einer Brennstoffzelle wird durch die elektrochemische Verbindung von Wasserstoff (H₂) und Sauerstoff (O₂) an einem Elektrolyten zu Wasser (H₂O) elektrischer Strom mit hohem Wirkungsgrad erzeugt. Die technische Umsetzung dieses Prinzips der Brennstoffzelle hat zu unterschiedlichen Lösungen, und zwar mit verschiedenen Elektrolyten und Betriebstemperaturen zwischen 60°C und 1000°C geführt. In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen voneinander unterscheiden.

Die Brennstoffzellen einer Brennstoffzellenanordnung werden während ihres Betriebs mit Betriebsgasen - also einem wasserstoffhaltigen Brenngas und einem sauerstoffhaltigen Oxidationsgas - versorgt. Manche Ausführungsformen von Niedertemperatur-Brennstoffzellen, insbesondere Brennstoffzellen mit einer Polymer-Elektrolyt-Membran (PEM-Brennstoffzellen), benötigen zum Betrieb befeuchtete Betriebsgase. Diese Betriebsgase werden in einer geeigneten Einrichtung, wie beispielsweise einem Flüssigkeitsringverdichter oder einem Membranbefeuchter, mit Wasserdampf gesättigt. Die Befeuchtungseinrichtung und eventuelle weitere Versorgungseinrichtungen bilden zusammen mit der Brennstoffzellenanordnung eine Brennstoffzelleneinrichtung.

Werden die Betriebsgase durch lange Betriebsgaszuleitungen vom Befeuchter zur Brennstoffzellenanordnung geleitet, so kann auf diesem Weg die Temperatur eines befeuchteten Betriebsgases durch Verlust von Wärme an die Umgebung sinken. Dies führt zur Kondensation von Befeuchtungswasser. Die Betriebsgase werden anschließend in den Brennstoffzellen wieder aufgeheizt, wodurch sich ihre relative Feuchtigkeit verringert. Hierdurch wird der stets feucht zu haltende und extrem trockenheitsempfindliche Elektrolyt geschädigt, dessen Lebensdauer sich somit verringert. Es ist daher wünschenswert, dass der Befeuchter möglichst nahe an den Brennstoffzellen angeordnet ist.

Aus der EP 1 435 121 B1 ist ein Brennstoffzellenblock mit einem Stapel aus planaren Brennstoffzellen und einem Stapel aus planaren Befeuchtungszellen bekannt. Beide Stapel sind unmittelbar benachbart im Brennstoffzellenblock angeordnet. Die Befeuchtungszellen sind als Membranbefeuchter augebildet, bei denen, ausgehend von einer ersten Außenplatte, zwischen der ersten Außenplatte und einer zweiten Außenplatte ein Gasraum, ein Befeuchtungswasserraum und eine die beiden Räume trennende wasserdurchlässige Membran angeordnet sind, wobei zwischen der Membran und der ersten Außenplatte ein wasserdurchlässiges Stützelement angeordnet ist.

Bevor die Betriebsgase den Brennstoffzellen des Brennstoffzellenstapels zugeleitet werden, durchströmen sie die Befeuchtungszellen, werden dort befeuchtet und strömen anschließend, ohne den Brennstoffzellenblock wieder zu verlassen, in den Brennstoffzellenstapel.

In dem Befeuchtungswasserraum, d.h. auf der einen Seite der Membran, strömt das Befeuchtungswasser und in dem Gasraum, d.h. auf der anderen Seite der Membran, strömt das Betriebsgas durch Kanäle, die in die jeweilige Außenplatte eingearbeitet sind. Um zu verhindern, dass entlang von Stegen der Außenplatten die Membran durch die Stege abgedeckt wird, so dass kein Befeuchtungswasser bzw. Betriebsgas zur Membran gelangen kann, ist zwischen der Membran und einer oder beiden der Außenplatten jeweils ein wasserdurchlässiges Stützelement angeordnet. Hierdurch wird die Membran im Bereich des Stützelements von der Außenplatte beabstandet gehalten und somit gewährleistet, dass großflächig Befeuchtungswasser bzw. Betriebsgas zur Membran dringen kann, wodurch die Befeuchtungsleistung vergrößert wird. Dies ist besonders wichtig bei der Verwendung großflächiger Strukturen in der Außenplatte. Je nachdem, auf welcher Seite der Membran das Stützelement angeordnet ist, durchdringt das Befeuchtungswasser entweder zuerst das Stützelement und dann die Membran oder zuerst die Membran und dann das Stützelement und gelangt so zum zu befeuchtenden Betriebsgas.

Zumindest das Stützelement zwischen der Membran und der zweiten Außenplatte besteht hierbei vorteilhaft aus Kohlepapier. Das Kohlepapier ist stabil gegen die verwendeten Betriebsmedien bzw. das Membranmaterial und hat bevorzugt hydrophile Eigenschaften, d.h. wird durch das Wasser vollständig benetzt. Das Kohlepapier garantiert auf Grund der Hydrophilie und der großen Oberfläche eine gute Befeuchtung und mögliche, durch den hydrostatischen Druck entstehende Wassertropfen werden auf der Oberfläche verteilt und im Gasraum durch den Gasstrom gasförmig mitgenommen. Die mechanischen Kräfte zwischen der Membran und der oder den Außenplatten werden durch das Kohlepapier gut aufgenommen, zudem wird ein direkter Kontakt zwischen der Membran und der oder den Außenplatten und somit Korrosion vermieden.

Als nachteilig bei der Verwendung von Kohlepapier hat sich herausgestellt, dass sich bei großen Gasgeschwindigkeiten über das Kohlepapier Kohlefasern lösen können, die durch den Gasstrom mitgenommen werden können. Dies kann zu Verstopfungen an engen Gasdurchlässen der Medienströme führen, was wiederum den Ausfall der Brennstoffzelleneinrichtung zur Folge haben kann.

Aus der JP 10 172 591 A ist ein netzartiges Stützelement aus Harz bekannt, welches an eine Membran einer Brennstoffzelle anliegt. Das Stützelement verhindert, dass bei einer Druckerhöhung einseitig der Membran die Membran sich in einen angrenzenden Raum ausdehnt.

Es ist Aufgabe vorliegender Erfindung, die Wirkung des aus dem Stand der Technik bekannten Stützelements zu verbessern.

Die Lösung dieser Aufgabe gelingt durch eine Befeuchtungszelle mit den Merkmalen des Patentanspruchs 1. Vorteilhafte Ausgestaltungen sind jeweils Gegenstand der Unteransprüche.

Erfindungsgemäß ist das zwischen der ersten Außenplatte und der Membran angeordnete erste wasserdurchlässige Stützelement nicht aus Kohlepapier, sondern aus einem Siebgewebe gefertigt. Wie Messungen überraschenderweise zeigen, kann auch mit einem Siebgewebe eine 100%-ige Gasbefeuchtung erreicht werden, ohne dass durch das Betriebsgas in dem Gasraum flüssiges Wasser in Form von Wassertröpfchen mitgerissen wird, was zu Einschränkungen in der Funktionsfähigkeit von Brennstoffzellen durch den Wassereintrag führen kann. Da das Siebgewebe durch einen Webvorgang eines Fadens und nicht aus kurzen Fasern erzeugt wird, können sich nicht wie bei der Verwendung von Kohlepapier kurze Fasern lösen, die zu Verstopfungen an kritischen Engstellen führen können.

Das Siebgewebe hinsichtlich seiner Dicke und des Durchmessers seiner Poren und die Membran hinsichtlich ihrer Steifigkeit sind derart aufeinander und auf die Drücke in den an die Membran angrenzenden Räumen abgestimmt, dass sich beim Betrieb der Befeuchtungszelle die Membran nicht durch die Poren zwängt und die Außenplatte berührt. Hierdurch können Beeinträchtigungen in der Befeuchtungsleistung und Korrosionsprobleme im Fall metallener Außenplatten vermieden werden. Das Siebgewebe ist dann trotz Poren ähnlich "dicht" wie ein entsprechendes Kohlepapier.

Hierbei liegt die Überlegung zugrunde, dass durch den Druck der Betriebsmedien in den an die Membran angrenzenden Räumen (d.h. dem Gasraum und dem Befeuchtungswasserraum) eine Kraft auf die Membran wirkt, die die Membran in die Poren des Siebgewebes drückt. Die Membran wird dabei umso mehr in die Poren gedrückt, je höher die auf die Membran in Richtung des Siebgewebes wirkende Kraft ist, je weniger steif sie ist sowie je größer der Porendurchmesser und je kleiner die Dicke des Siebgewebes sind.

Das Siebgewebe weist Poren mit einem Durchmesser auf, der zu der Dicke des Siebgewebes in einem Verhältnis von 1:2 bis 1:5, insbesondere von 1:3 bis 1:4 steht. Bei einem derartigen Porendurchmesser und einer derartigen Gewebedicke lässt sich eine besonders gute mechanische Festigkeit des Stützelementes erzielen.

Bevorzugt ist zwischen der Membran und der zweiten Außenplatte ein zweites wasserdurchlässiges Stützelement angeordnet, das vorzugsweise ebenfalls aus einem Siebgewebe gefertigt ist. Wenn beidseitig der Membran jeweils ein Stützelement angeordnet ist, kann die Membran besonders zuverlässig in einer gewünschten Position gehalten werden. Unabhängig davon, ob die Membran fest mit dem bzw. den Stützelementen verbunden ist oder lösbar zwischen den Stützelementen eingeklemmt ist, ist im Bereich der Stützelemente eine teilweise Abdeckung der Membran durch die Außenplatten nicht möglich. Hierdurch ist eine zuverlässig hohe Befeuchtungsleistung der Membran gewährleistet.

Das Siebgewebe besteht bevorzugt aus einem Kunststoff, vorzugsweise aus Polypropylen oder Polyester. Insbesondere Polypropylen oder Polyester weisen eine entsprechende Stabilität gegen die Betriebsgase, die üblicherweise verwendeten stark sauren Ionenaustauschermembrane und die auftretenden Temperaturen auf. Auf Grund ihrer mechanischen Eigenschaften (Verformung, Festigkeit) sind diese Materialien in der Lage, die auftretenden mechanischen Kräfte aufzunehmen, ohne Schaden zu nehmen bzw. die benachbarten Bauteile zu beschädigen. Alternativ eignen sich auch Hochleistungskunststoffe. Besonders geeignet im Hinblick auf die in Befeuchtungszellen vorkommenden Temperaturen, Betriebsmedien und mechanischen Anforderungen ist hierbei Polyetheretherketon (PEEK) oder Polysulfon (PSU).

Bevorzugt weist das Siebgewebe dabei Poren mit einem Durchmesser von 50 µm bis 150 µm, insbesondere von 90 µm bis 110 µm, auf und das Siebgewebe weist eine Dicke von 200 µm bis 500 µm, insbesondere von 300 µm bis 400 µm, auf. Bei einem derartigen Porendurchmesser und einer derartigen Gewebedicke lassen sich mit handelsüblichen Membranen gleichzeitig besonders gute mechanische Eigenschaften des Stützelementes, eine besonders gute Befeuchtungsleistung und ein guter Korrosionsschutz der Außenplatte erzielen.

Eine besonders stabile Lagerung der Membran und ein besonders einfacher Aufbau der Befeuchtungszelle wird dadurch erreicht, dass die erste Außenplatte, das erste Stützelement, die Membran, das zweite Stützelement und die zweite Außenplatte jeweils aneinander anliegen. Hierbei weisen die Außenplatten zweckmäßigerweise Kanäle oder Prägungen auf, durch die das Betriebsgas oder das Befeuchtungswasser entlang der Außenplatte und entlang des an der Außenplatte anliegenden Stützelements strömen kann. Bei dieser Ausgestaltung bildet die Befeuchtungszelle einen besonders stabilen und weitgehend gegen Druck unempfindlichen Verbund. Diese Ausgestaltung der Erfindung ist besonders geeignet bei sehr flachen Befeuchtungszellen mit einem sehr flachen Gasraum und/oder Befeuchtungswasserraum.

Das Stützelement kann die dem Befeuchtungswasser oder dem Betriebsgas zugängliche Fläche der Membran vollständig bedecken. Eine gute Stütze der Membran ist jedoch auch gewährleistet, wenn das Stützelement, beispielsweise durch Aussparungen im Stützelement, nur einen Teil der flachen Seite der Membran bedeckt. Hierdurch erfolgt ein ungehinderter Zugang vom Befeuchtungswasser und Betriebsgas zur Membran, wodurch die Befeuchtungsleistung der Befeuchtungszelle erhöht wird.

Ausführungsbeispiele der Erfindung werden anhand von fünf Figuren näher erläutert. Dabei zeigen:
- FIG 1: eine Draufsicht auf eine aufgeschnitten dargestellte Befeuchtungszelle;
- FIG 2: einen Schnitt durch die Befeuchtungszelle aus FIG 1;
- FIG 3: einen weiteren Schnitt durch die Befeuchtungszelle von FIG 1;
- FIG 4: eine Brennstoffzelleneinrichtung;
- FIG 5: einen Schnitt durch ein Stützelement mit einer anliegenden Membran und Außenplatte.

Gleiche Gegenstände sind in den Figuren mit gleichen Bezugszeichen versehen.

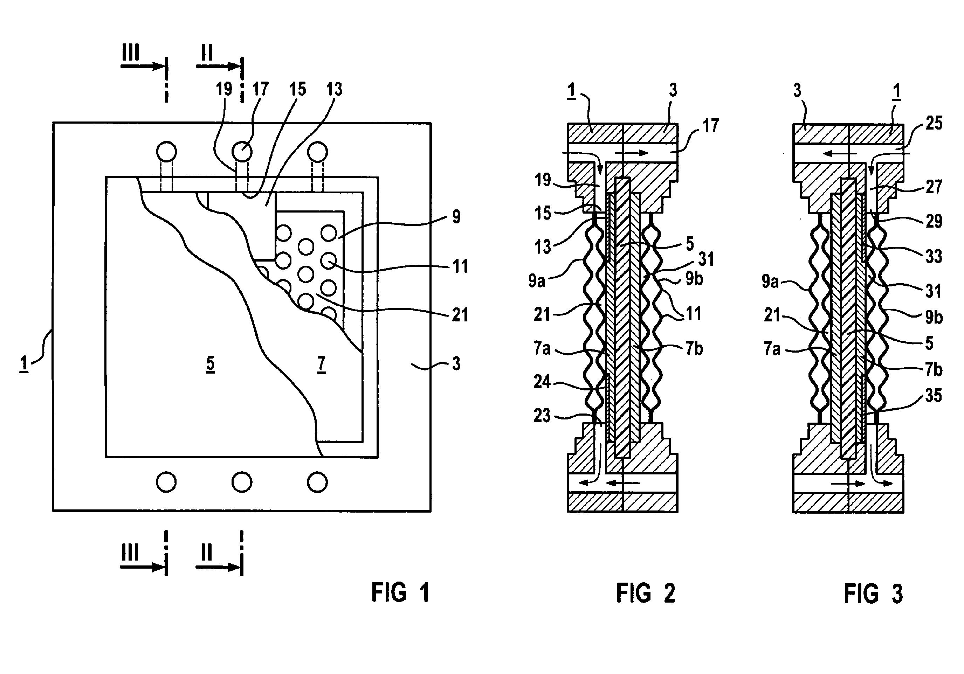

In FIG 1 ist in einer schematischen Draufsicht der grundsätzliche Aufbau eine rechteckigen und planaren Befeuchtungszelle 1 dargestellt, die eine in einem Rahmen aus einem Dichtmaterial 3 eingebettete und aufgeschnitten dargestellte Membran 5 umfasst. Unter der Membran 5 ist in ebenfalls aufgeschnittener Darstellung ein Stützelement 7 sichtbar. Unterhalb des Stützelements 7 ist eine Außenplatte 9 dargestellt, die als ein Blech mit einer Prägestruktur 11 ausgestaltet ist. Die Prägestruktur 11 besteht aus runden Erhöhungen bzw. Vertiefungen innerhalb der Außenplatte 9. Zwischen der Außenplatte 9 und dem Stützelement 7 ist eine Abdeckvorrichtung 13 angebracht. Die Abdeckvorrichtung 13 ist im Bereich eines Betriebsmitteleinlasses 15 angeordnet.

FIG 2 zeigt einen Schnitt durch die Befeuchtungszelle 1 entlang der Linie II-II, wobei jedoch nun beidseitig der Membran 5 jeweils ein Stützelement 7a bzw. 7b und eine Außenplatte 9a bzw. 9b angeordnet sind. Im Detail umfasst die Befeuchtungszelle 1 eine erste Außenplatte 9a und eine zweite Außenplatte 9b. Ausgehend von der ersten Außenplatte 9a sind zwischen der ersten Außenplatte 9a und der zweiten Außenplatte 9b ein Gasraum 21, ein Befeuchtungswasserraum 31 und die die beiden Räume 21, 31 trennende wasserdurchlässige Membran 5 angeordnet. Zwischen der ersten Außenplatte 9a und der Membran 5 ist ein erstes wasserdurchlässiges Stützelement 7a und zwischen der zweiten Außenplatte 9b und der Membran 5 ist ein zweites wasserdurchlässiges Stützelement 7b angeordnet.

Die Befeuchtungszelle 1 ist Teil eines Befeuchtungszellenstapels einer Brennstoffzelleneinrichtung. Während des Betriebs der Befeuchtungszelle 1 strömt Brenngas durch den Axialkanal 17 der Befeuchtungszelle 1. Der Axialkanal 17 ist parallel zur Stapelrichtung des Befeuchtungszellenstapels ausgerichtet. Vom Axialkanal 17 zweigt jeweils ein Radialkanal 19 zu einer der Befeuchtungszellen 1 des Befeuchtungszellenstapels ab. Das Brenngas strömt durch den Radialkanal 19 und im weiteren Verlauf durch den Betriebsmitteleinlass 15 und gelangt anschließend in den Gasraum 21 der Befeuchtungszelle 1. Nach Austritt aus dem Betriebsmitteleinlass 15 streicht das Brenngas ohne signifikante Turbulenzen zu bilden einerseits an der Abdeckvorrichtung 13 und andererseits an der Außenplatte 9 der Befeuchtungszelle 1 entlang.

Die erste Außenplatte 9a ist als ein Heizelement ausgestaltet, das aus zwei Metallblechen zusammengesetzt ist. Zwischen den Metallblechen befindet sich ein Heizwasserraum, durch den während des Betriebs der Befeuchtungszelle 1 warmes Heizwasser strömt. Dieses Heizwasser heizt sowohl das durch die Befeuchtungszelle 1 strömende Brenngas wie auch das Befeuchtungswasser auf annähernd die Temperatur der Brennstoffzellen der Brennstoffzelleneinrichtung.

Im Gasraum 21 wird das Brenngas mit Befeuchtungswasser befeuchtet und gelangt nach Durchströmen des Gasraums 21 zum Betriebsmittelauslass 23 des Gasraums 21. Durch einen weiteren Radialkanal und einen weiteren Axialkanal strömend verlässt es im befeuchteten Zustand die Befeuchtungszelle 1 wieder. Auch im Bereich des Betriebsmittelauslasses 23 ist das Stützelement 7a durch eine weitere Abdeckvorrichtung 24 abgedeckt, um Turbulenzen beim Einströmen des Brenngases in den Betriebsmittelauslass 23 zu verhindern.

FIG 3 zeigt einen Schnitt durch die Befeuchtungszelle 1 entlang der in FIG 1 dargestellten Linie III-III, wobei auch hier nun beidseitig der Membran 5 jeweils ein Stützelement 7a bzw. 7b und eine Außenplatte 9a bzw. 9b angeordnet sind. Dieser Schnitt ist entlang eines Axialkanals 25 geführt, der während des Betriebs der Befeuchtungszelle 1 Befeuchtungswasser führt. Das Befeuchtungswasser strömt durch den Axialkanal 25 und gelangt durch den Radialkanal 27 zu einem weiteren Betriebsmitteleinlass 29. Diesen Betriebsmitteleinlass 29 durchströmend gelangt das Befeuchtungswasser in den Befeuchtungswasserraum 31, und strömt zwischen die zweite Außenplatte 9b und eine Abdeckvorrichtung 33. Anschließend gelangt das Befeuchtungswasser zum zweiten Stützelement 7b.

Ein Teil des Befeuchtungswassers durchdringt das zweite Stützelement 7b und gelangt zur Membran 5. Nach Durchtreten dieser wasserdurchlässigen Membran 5 durchdringt das Befeuchtungswasser auch das an der anderen Seite der Membran 5 angeordnete erste Stützelement 7a. An der dem Gasraum 21 zugewandten Seite des Stützelements 7a verdampft das Befeuchtungswasser und befeuchtet somit das durch den Gasraum 21 strömende Brenngas. Ein weiterer Teil des Befeuchtungswassers durchströmt den Befeuchtungswasserraum 31 ungenutzt, streicht entlang einer weiteren Abdeckvorrichtung 35 und verlässt die Befeuchtungszelle 1 nach Durchströmen durch einen Radialkanal und einen weiteren Axialkanal wieder.

Auch die zweite Außenplatte 9b ist als ein Heizelement ausgestaltet, das aus zwei Metallblechen zusammengesetzt ist. Zwischen den Metallblechen befindet sich ein Heizwasserraum, durch den während des Betriebs der Befeuchtungszelle 1 warmes Heizwasser strömt. Dieses Heizwasser heizt das durch den Befeuchtungswasserraum 31 strömende Befeuchtungswasser auf annähernd die Temperatur der Brennstoffzellen der Brennstoffzelleneinrichtung.

Die beiden Stützelemente 7a und 7b liegen lösbar an der wasserdurchlässigen Membran 5 an und bedecken die flachen Außenseiten der Membran 5 bis auf eine schmale Außenkante vollständig. Die beiden Stützelemente 7a und 7b bilden zusammen mit der Membran 5 eine Membran-Anordnung, die zwischen den beiden Außenplatten 9a, 9b der Befeuchtungszelle 1 eingeklemmt ist. Die Stützelemente 7a, 7b liegen somit auf der einen Seite an der Membran 5 an und auf der anderen Seite an einer der Außenplatten 9a, 9b an. Durch die Stützelemente 7a, 7b wird die Membran 5 fest in ihrer Position gehalten. Außerdem bewirken die Stützelemente 7a, 7b, dass die Membran 5 an keiner Stelle die Außenplatten 9a, 9b berühren kann und somit von einem Teil der Außenplatten 9a, 9b abgedeckt wird.

Die Stützelemente 7a, 7b sind hierbei aus einem KunststoffSiebgewebe gefertigt, das aus Polypropylen oder aus Polyester besteht. Alternativ kann das Kunststoffsiebgewebe auch aus einem Hochleistungskunststoff, insbesondere aus Polyetheretherketon (PEEK) oder Polysulfon (PSU), bestehen.

Das Siebgewebe weist dabei Poren mit einem Durchmesser auf, der zu der Dicke des Siebgewebes in einem Verhältnis von 1:2 bis 1:5, insbesondere von 1:3 bis 1:4 steht. Grundsätzlich hat sich ein Porendurchmesser von 50 µm bis 150 µm, insbesondere von 90 µm bis 110 µm, und eine Gewebedicke von 200 µm bis 500 µm, insbesondere von 300 µm bis 400 µm, als vorteilhaft herausgestellt.

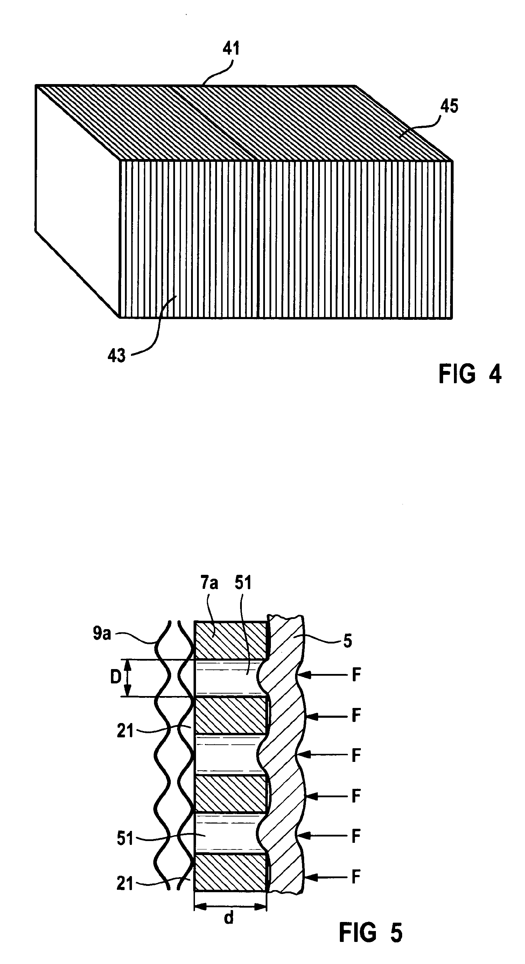

In FIG 4 ist in schematischer Darstellung eine Brennstoffzelleneinrichtung 41 in Form eines Brennstoffzellenblocks gezeigt. Die Brennstoffzelleneinrichtung 41 umfasst einen Stapel aus Befeuchtungszellen 43 und einen Stapel aus Brennstoffzellen 45. Die Befeuchtungszellen 43 weisen die gleiche Breite und Höhe auf, wie die Brennstoffzellen 45. Hierdurch hat der Brennstoffzellenblock entlang der Stapelrichtung der Befeuchtungszellen 43 und der Brennstoffzellen 45 entlang einer Stapelachse eine gleichmäßige Breite und Höhe. Außerdem haben die Befeuchtungszellen 43 die gleiche Dicke wie die Brennstoffzellen 45, so dass die äußere Form und die äußeren Abmessungen der Befeuchtungszellen 43 gleich sind wie die äußere Form und die äußeren Abmessungen der Brennstoffzellen 45.

Messungen der Strom-Spannungskennlinien und der aufgenommenen Befeuchtungsleistung bei Verwendung von Stützelementen 7a, 7b aus Kohlepapier im Vergleich zu Stützelementen 7a, 7b aus Siebgewebe zeigen kaum Unterschiede, d.h. die Performance einer Befeuchtungszelle mit Stützelementen aus Siebgewebe ist vergleichbar der Performance einer Befeuchtungszelle mit Stützelementen aus Kohlepapier, mit dem zusätzlichen Vorteil, dass ein Ablösen von Kohlefasern und somit Verstopfungen an engen Gasdurchlässen der Medienströme vermieden werden können. Bei den Messungen wurde ein Siebgewebe verwendet, das Poren mit einem Durchmesser von ca. 100 µm bei einer Dicke des Siebgewebes von ca. 350 µm aufweist.

Bevorzugt sind hierbei das Siebgewebe hinsichtlich seiner Dicke und des Durchmessers seiner Poren und die Membran hinsichtlich ihrer Steifigkeit derart aufeinander und auf den Druck in den an die Membran angrenzenden Räumen abgestimmt sind, dass sich beim Betrieb der Befeuchtungszelle die Membran nicht durch die Poren zwängt und die Außenplatte berührt.

FIG 5 zeigt hierzu in einer sehr vereinfachten Darstellung einen weiteren Schnitt durch ein Stützelement, hier das Stützelement 7a, mit einer anliegenden Membran 5 und einer anliegenden Außenplatte 9a.

Im Fall dass der Druck in dem Gasraum 21 der Befeuchtungszelle 1, der in Bezug auf die Membran 5 auf der gleichen Seite liegt wie das Stützelement 7a bzw. das Siebgewebe, kleiner ist als in dem nicht näher dargestellten Befeuchtungswasserraum 31, der auf der dem Stützelement 7a bzw. dem Siebgewebe abgewandten Seite der Membran 5 liegt, wirkt eine Kraft F senkrecht auf die Membran 5 in Richtung auf das Stützelement 7a bzw. Siebgewebe, die die Membran 5 in die Poren 51 des Stützelementes 7a bzw. des Siebgewebes drückt.

Die Membran 5 wird dabei umso mehr in die Poren 51 gedrückt, je höher die auf die Membran 5 wirkende Kraft F ist, je weniger steif sie ist sowie je größer der Porendurchmesser D und je kleiner die Dicke d des Siebgewebes des Stützelementes 7a ist.

Durch die vorstehend erläuterte Aufeinanderabstimmung des Siebgewebes des Stützelementes 7a auf die Membran 5 und die Drücke in dem Gasraum 21 und dem Befeuchtungswasserraum 31 wird jedoch vorteilhaft vermieden, dass sich die Membran 5 durch die Poren 51 zwängt und die Außenplatte 9a berührt.

## Patentansprüche

1. Befeuchtungszelle (1) einer Brennstoffzelleneinrichtung (41) mit einer ersten Außenplatte (9a) und einer zweiten Außenplatte (9b), wobei ausgehend von der ersten Außenplatte (9a) zwischen der ersten Außenplatte (9a) und der zweiten Außenplatte (9b) ein Gasraum (21), ein Befeuchtungswasserraum (31) und eine die beiden Räume (21, 31) trennende wasserdurchlässige Membran (5) angeordnet ist, wobei zwischen der ersten Außenplatte (9a) und der Membran (5) ein erstes wasserdurchlässiges Stützelement (7a) angeordnet ist, und wobei das erste Stützelement (7a) aus einem Siebgewebe gefertigt ist, **dadurch gekennzeichnet, dass** das Siebgewebe hinsichtlich seiner Dicke und des Durchmessers (D) seiner Poren (51) und die Membran (5) hinsichtlich ihrer Steifigkeit derart aufeinander und auf die Drücke in den an die Membran (5) angrenzenden Räumen (21, 31) abgestimmt sind, dass sich beim Betrieb der Befeuchtungszelle (1) die Membran (5) nicht durch die Poren (51) zwängt und die Außenplatte (9a bzw. 9b) berührt, wobei das Siebgewebe Poren mit einem Durchmesser aufweist, der zu der Dicke des Siebgewebes in einem Verhältnis von 1:2 bis 1:5, insbesondere von 1:3 bis 1:4 steht.

2. Befeuchtungszelle (1) nach Anspruch 1,
**dadurch gekennzeichnet, dass** zwischen der Membran (5) und der zweiten Außenplatte (9b) ein zweites wasserdurchlässiges Stützelement (7b) angeordnet ist, das vorzugsweise ebenfalls aus einem Siebgewebe gefertigt ist.

3. Befeuchtungszelle (1) nach einem der vorhergehenden Ansprüche, **dadurch gekennzeichnet, dass** das Siebgewebe aus einem Kunststoff besteht.

4. Befeuchtungszelle (1) nach Anspruch 3,
**dadurch gekennzeichnet, dass** der Kunststoff aus einem Polypropylen oder aus Polyester besteht.

5. Befeuchtungszelle (1) nach Anspruch 3,
**dadurch gekennzeichnet, dass** der Kunststoff aus einem Hochleistungskunststoff, insbesondere aus Polyetheretherketon (PEEK) oder Polysulfon (PSU), besteht.

6. Befeuchtungszelle (1) nach einem der vorhergehenden Ansprüche, **dadurch gekennzeichnet, dass** das Siebgewebe Poren mit einem Durchmesser von 50 µm bis 150 µm, insbesondere von 90 µm bis 110 µm, aufweist.

7. Befeuchtungszelle (1) nach einem der vorhergehenden Ansprüche, **dadurch gekennzeichnet, dass** das Siebgewebe eine Dicke von 200 µm bis 500 µm, insbesondere von 300 µm bis 400 µm, aufweist.

8. Befeuchtungszelle (1) nach einem der Ansprüche 2 bis 7,
**dadurch gekennzeichnet, dass** die erste Außenplatte (9a), das erste Stützelement (7a), die Membran (5), das zweite Stützelement (7b) und die zweite Außenplatte (9b) jeweils aneinander anliegen.

## Claims

1. Humidification cell (1) of a fuel cell apparatus (41) with a first outer plate (9a) and a second outer plate (9b), there being arranged between the first outer plate (9a) and the second outer plate (9b), starting from the first outer plate (9a), a gas chamber (21), a humidification water chamber (31) and a water-permeable membrane (5) separating the two chambers (21, 31), a first water-permeable support element (7a) being arranged between the first outer plate (9a) and the membrane (5), and the first support element (7a) being made from a screen fabric **characterized in that** the screen fabric and the membrane (5) are matched to one another, and to the pressures in the chambers (21, 31) adjoining the membrane (5), with regard to the thickness and the diameter (D) of the pores (51) of the former and to the rigidity of the latter, such that, when the humidification cell (1) is in operation, the membrane (5) does not squeeze through the pores (51) and come into contact with the outer plate (9a or 9b respectively), the screen fabric comprising pores with a diameter which is in a ratio to the thickness of the screen fabric of 1:2 to 1:5, in particular of 1:3 to 1:4.

2. Humidification cell (1) according to Claim 1, **characterized in that** a second water-permeable support element (7b) is arranged between the membrane (5) and the second outer plate (9b), which second support element is preferably likewise made from a screen fabric.

3. Humidification cell (1) according to one of the preceding claims, **characterized in that** the screen fabric consists of plastics.

4. Humidification cell (1) according to Claim 3, **characterized in that** the plastics consists of a polypropylene or of polyester.

5. Humidification cell (1) according to Claim 3, **characterized in that** the plastics consists of a high performance plastics, in particular of polyetheretherketone (PEEK) or polysulfone (PSU).

6. Humidification cell (1) according to one of the preceding claims, **characterized in that** the screen fabric comprises pores with a diameter of 50 µm to 150 µm, in particular of 90 µm to 110 µm.

7. Humidification cell (1) according to one of the preceding claims, **characterized in that** the screen fabric comprises a thickness of 200 µm to 500 µm, in particular of 300 µm to 400 µm.

8. Humidification cell (1) according to one of Claims 2 to 7, **characterized in that** the first outer plate (9a), the first support element (7a), the membrane (5), the second support element (7b) and the second outer plate (9b) in each case rest against one another.

## Revendications

1. Cellule ( 1 ) d'humidification d'un dispositif ( 41 ) de pile à combustible, comprenant une première plaque ( 9a ) extérieure et une deuxième plaque ( 9b ) extérieure, dans laquelle, à partir de la première plaque ( 9a ) extérieure, il y a, entre la première plaque ( 9a ) extérieure et la deuxième plaque ( 9b ) extérieur, un espace ( 21 ) pour du gaz, un espace ( 31 ) pour de l'eau d'humidification et une membrane ( 5 ) perméable à l'eau, qui sépare les deux espaces ( 21, 31 ), dans laquelle un premier élément ( 7a ) d'appui, qui est perméable à l'eau, est disposé entre la plaque ( 9a ) extérieure et la membrane ( 5 ) et dans laquelle le premier élément ( 7a ) d'appui est fabriqué en une toile formant tamis, **caractérisé en ce que** la toile formant tamis, du point de vue de son épaisseur et du diamètre ( D ) de ses pores, ( 51 ) et la membrane ( 5 ), du point de vue de sa rigidité, sont adaptées l'une à l'autre et sont adaptées aux pressions dans les espaces ( 21, 31 ) au voisinage de la membrane ( 5 ), **en ce que**, lorsque la cellule ( 1 ) d'humidification fonctionne, la membrane ( 5 ) n'est pas forcée dans les pores ( 51 ) et ne touche pas la plaque ( 9a ou 9b) extérieure, la toile formant tamis ayant des pores d'un diamètre qui, par rapport à l'épaisseur de la toile formant tamis, va d'un rapport de 1 : 2 à 1 : 5, notamment de 1 : 3 à 1 : 4.

2. Cellule ( 1 ) d'humidification suivant la revendication 1, **caractérisée en ce qu'**entre la membrane ( 5 ) et la deuxième plaque ( 9b ) extérieure est disposé un deuxième élément
( 7b ) d'appui, qui est perméable à l'eau et qui est, de préférence, fabriqué également en une toile formant tamis.

3. Cellule ( 1 ) d'humidification suivant l'une des revendications précédentes,
**caractérisée en ce que** la toile formant tamis est en une matière plastique.

4. Cellule ( 1 ) d'humidification suivant la revendication 3,
caractérisée en ce la matière plastique est un polypropylène ou un polyester.

5. Cellule ( 1 ) d'humidification suivant la revendication 3, **caractérisée en ce que** la matière plastique est une matière plastique très performante, notamment une polyétheréthercétone ( PEEK ) ou une polysulfone ( PSU ).

6. Cellule ( 1 ) d'humidification suivant l'une des revendications précédentes,
**caractérisée en ce que** la toile formant tamis a des pores d'un diamètre de 50 µm à 150 µm, notamment de 90 µm à 110 µm.

7. Cellule ( 1 ) d'humidification suivant l'une des revendications précédentes,
**caractérisée en ce que** la toile formant tamis a une épaisseur de 200 µm à 500 µm, notamment de 300 µm à 400 µm.

8. Cellule ( 1 ) d'humidification suivant l'une des revendications 2 à 7,
**caractérisée en ce que** la première plaque ( 9a ) extérieure, le premier élément ( 7a ) d'appui, la membrane ( 5 ), le deuxième élément ( 7b ) d'appui et la deuxième plaque ( 9b ) extérieure s'appliquent respectivement les uns aux autres.
